# EUROPÄISCHE PATENTSCHRIFT

(11) **EP 3 291 930 B1**
(45) Veröffentlichungstag und Bekanntmachung des Hinweises auf die Patenterteilung: **12.06.2019**
(21) Anmeldenummer: 16721094.7
(22) Anmeldetag: 19.04.2016
(51) Int. Cl.: B21F 3/00, B21F 99/00, B23Q 11/00, B23Q 11/08, F16P 3/02, F16P 3/12

(54) **DRAHTVERARBEITUNGSMASCHINE MIT SCHUTZVORRICHTUNG**
WIRE PROCESSING MACHINE WITH PROTECTION DEVICE
MACHINE DE TRAITEMENT DE FIL MÉTALLIQUE PRÉSENTANT UN DISPOSITIF DE PROTECTION

(30) Priorität: 04.05.2015 DE 102015208222
(43) Veröffentlichungstag der Anmeldung: 14.03.2018
(73) Patentinhaber: WAFIOS Aktiengesellschaft, 72764 Reutlingen (DE)
(72) Erfinder: SCHUR, Andreas, 72581 Dettingen (DE); KUHNERT, Oliver, 72827 Wannweil (DE)
(74) Vertreter: Patentanwälte Ruff, Wilhelm, Beier, Dauster & Partner mbB
(86) Internationale Anmeldenummer: PCT/EP2016/058617
(87) Internationale Veröffentlichungsnummer: WO 2016/177565

(56) Entgegenhaltungen:
- EP-A2- 2 407 704
- CN-U- 203 853 563
- CN-U- 204 221 513
- DE-B3-102012 204 513
- DE-U1-202010 007 645
- DE-U1-202010 016 456

## Beschreibung

Die Erfindung betrifft eine Drahtverarbeitungsmaschine zur Herstellung von Umformteilen durch Umformen von Draht gemäß dem Oberbegriff von Anspruch 1. Ein bevorzugtes Anwendungsgebiet liegt bei Federherstellungsmaschinen zur Herstellung von Federn durch Umformen von Draht.

Schraubenfedern sind Maschinenelemente, die in zahlreichen Anwendungsbereichen in großen Stückzahlen und unterschiedlichen Ausgestaltungen benötigt werden. Schraubenfedern, die auch als gewundene Torsionsfedern bezeichnet werden, werden üblicherweise aus Federdraht herstellt und je nach der bei der Nutzung vorliegenden Belastung als Zugfedern, Druckfedern oder Schenkelfedern ausgelegt. Schenkelfeder nennt man eine Schraubenfeder, die um ihre Achse auf Biegung beansprucht wird. Im Unterschied zu den Haken oder Ösen der Zugfeder endet der Federdraht typischerweise in hebelartigen Schenkeln, an denen sich ein Drehmoment einleiten lässt.

Schraubenfedern werden heutzutage üblicherweise mit Hilfe dedizierter Drahtverarbeitungsmaschinen, nämlich mit numerisch gesteuerten Federherstellungsmaschinen, durch Federwinden oder Federwickeln hergestellt. Dabei wird ein Draht (Federdraht) unter der Steuerung durch ein NC-Steuerprogramm mittels einer Zuführeinrichtung einer Umformeinrichtung der Federherstellungsmaschine zugeführt und mit Hilfe von Werkzeugen der Umformeinrichtung zu einer Schraubenfeder umgeformt. Bei Federwindemaschinen gehören zu den Werkzeugen in der Regel ein oder mehrere bezüglich ihrer Stellung einstellbare Windestifte zur Festlegung und ggf. zur Veränderung des Durchmessers von Federwindungen und ein oder mehrere Steigungswerkzeuge, durch die die lokale Steigung der Federwindungen in jeder Phase des Fertigungsprozesses bestimmt wird. Nach Abschluss einer Umformoperation wird eine fertiggestellte Schraubenfeder unter der Steuerung durch das NC-Steuerprogramm mittels einer Schnitteinrichtung von dem zugeführten Draht abgetrennt.

Zur effizienten Herstellung großer Stückzahlen von Schraubenfedern werden heutzutage hochproduktive computernumerisch gesteuerte, mehrachsige Federherstellungsmaschinen eingesetzt. Viele dieser Maschinen können Federn mit einer sehr hohen Ausbringungsleistung herstellen, nicht selten in der Größenordnung von mehreren einhundert Federn pro Minute.

Es gibt auch Drahtverarbeitungsmaschinen zur wirtschaftlichen Herstellung von präzisen Spezialstiften und Nägeln aus Draht. Diese Maschinen werden häufig als Drahtstiftmaschinen bezeichnet.

Obwohl durch steuerungstechnische Sicherheitsroutinen und durch konstruktive Sorgfalt die Störungsanfälligkeit moderner Drahtverarbeitungsmaschinen relativ gering ist, kann es zu Störungen im Betriebsablauf kommen, z.B. durch unvorschriftsmäßige Bedienung und/oder Fehler bei der Programmierung eines Umformprozesses beim Einrichten der Maschine und/oder durch Werkzeugbruch. Beim Automatikbetrieb kann bei bewegten Maschinenteilen durch Quetschen, Schneiden, Erfassen oder Herausschleudern von Teilen der Maschine oder von Werkstücken Gefahr entstehen. Zu beachten ist auch, dass während des laufenden Betriebs ein Zugriff durch Personen in den Arbeitsbereich mit den Umformwerkzeugen zur Vermeidung von Verletzung verhindert werden sollte. Gefahr kann z.B. auch durch Verbrennungen an heißen Motoren drohen.

Daher ist bei einigen bekannten Drahtverarbeitungsmaschinen eine Schutzvorrichtung zur temporären Abdeckung des Arbeitsbereichs während des Betriebs der Drahtverarbeitungsmaschinen vorgesehen. Bei manchen Federherstellungsmaschinen der Anmelderin gibt es z.B. eine hoch- und herunter klappbare Schutzhaube, die den Arbeitsbereich während des Betriebs nach vorne zur Bedienerseite abdeckt, vor Zugriff durch den Bediener schützt und im Störfall auch verhindern kann, dass der Bediener durch unkontrolliert aus dem Arbeitsbereich heraus gelangende Teile verletzt wird.

### AUFGABE UND LÖSUNG

Der Erfindung liegt die Aufgabe zugrunde, Drahtverarbeitungsmaschinen der gattungsgemäßen Art hinsichtlich Betriebssicherheit und Bedienbarkeit zu verbessern.

Diese Aufgabe wird gelöst durch eine Drahtverarbeitungsmaschine mit den Merkmalen von Anspruch 1. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß der beanspruchten Erfindung weist die Schutzvorrichtung ein Rollo auf, das zwischen einer Offenstellung und einer Schließstellung beweglich ist. In der Offenstellung ist ein Zugriff eines Bedieners in den Arbeitsbereich möglich. Das Rollo kann beispielsweise in die Offenstellung gebracht werden, wenn beim Einrichten der Maschine Arbeiten im Bereich der Umformwerkzeuge ausgeführt werden müssen. Wenn sich das Rollo in der Schließstellung befindet, wird ein Zugriff des Bedieners in den Arbeitsbereich durch das Rollo verhindert. So kann ein Bediener während des Betriebs nicht in den Arbeitsbereich eingreifen, so dass insoweit eine Verletzungsgefahr ausgeschlossen ist. Wenn sich das Rollo in Schließstellung befindet, besteht andererseits auch keine Gefahr, dass der Bediener oder andere Personen durch unkontrolliert aus dem Arbeitsbereich heraus gelangende Teile verletzt werden, da das geschlossene Rollo außerhalb des durch das Rollo abgedeckten Bereichs stehende Personen schützen kann.

Der Begriff "Rollo" bezeichnet im Rahmen dieser Anmeldung ein in mindestens eine Richtung flexibles bzw. in seiner Form veränderbares Flächengebilde, das als Schutzelement der Schutzvorrichtung dienen kann. Das Rollo kann z.B. durch Aufrollen oder Zusammenfalten von einer flächig ausgedehnten Konfiguration in eine kompakte aufgerollte oder zusammengefaltete Konfiguration überführt werden. Es kann sich somit insbesondere um ein Falt-Rollo oder um ein aufrollbares Rollo handeln. In der flächig ausgedehnten Konfiguration kann das Rollo als Schutzelement dienen. Wir dieser Schutz nicht benötigt, kann es durch Zusammenrollen oder Zusammenfalten bequem platzsparend verstaut werden.

Das Rollo ist in seiner Schließstellung flächig ausgedehnt (z.B. entrollt oder auseinandergefaltet) und kann eine beispielsweise rechteckförmige Fensteröffnung verschließen, die als Zugang zum Arbeitsbereich dient. Beim Öffnen, also beim Überführen von der Schließstellung in die Offenstellung, wird das Rollo durch (mindestens teilweises) Zusammenrollen oder Zusammenfalten in eine platzsparende kompakte (teilweise oder vollständig aufgerollte oder zusammengefaltete) Konfiguration überführt. Da das Rollo ein in mindestens eine Richtung flexibles bzw. in seiner Form veränderbares Element aufweist, benötigt die Überführung von der Schließstellung zur Offenstellung und zurück im Bereich vor der zu öffnenden oder zu schließenden Öffnung keinen freien Platz vor der Öffnung, so dass ein Bediener beim Öffnen und Schließen bequem vor der Maschine stehen bleiben kann. Hierdurch wird die Sicherheit am Arbeitsplatz erhöht.

Ein einziges Rollo reicht in den meisten Fällen aus. Es ist auch möglich, eine Öffnung mittels mehrerer Rollos, z.B. mithilfe von zwei Rollos, zu verschließen.

Das Öffnen und Schließen erfolgt bei manchen Ausführungsformen in vertikaler Richtung, wobei vorzugsweise durch Verschieben nach oben geöffnet und nach unten geschlossen wird. Ein Rollo kann auch so installiert werden, dass Öffnen und Schließen ähnlich einer Schiebetür in horizontaler Richtung erfolgt.

Ein besonders hohes Maß an Sicherheit für den Bediener wird dadurch erreicht, dass das Rollo eine Kontaktzone aufweist, welche sich an der der Umformeinrichtung zugewandten Innenseite des Rollos auf Höhe des Arbeitsbereichs befindet, wenn das Rollo in Schließstellung ist, wobei die Kontaktzone derart ausgebildet ist, dass bei Auftreffen eines Gegenstandes auf die Kontaktzone ein den Kontakt anzeigendes Kontaktsignal generiert wird, welches an die Steuereinrichtung übertragbar ist. Bei dem Kontaktsignal handelt es sich vorzugsweise um ein elektrisches Signal, welches drahtgebunden oder drahtlos zur Steuereinrichtung übertragen werden kann.

Die Steuereinrichtung kann so konfiguriert sein, dass bei Empfang eines Kontaktsignals eine Abschaltung beweglicher Einrichtungen der Drahtverarbeitungsmaschine eingeleitet wird. Somit kann beispielsweise eine Notabschaltung der Drahtverarbeitungsmaschine bei Berührung der Kontaktzone durch den Draht automatisch ausgeführt werden. Damit können unter anderem Risikosituationen entschärft werden, bei denen es durch einen Werkzeugbruch und/oder durch eine Fehlprogrammierung der Zuführeinrichtung dazu kommen kann, dass sich Draht unkontrolliert von der Maschinenvorderwand weg in Richtung des Bedienbereichs bewegt. Alternativ oder zusätzlich kann in Reaktion auf den Empfang des Kontaktsignals ein optisches und/oder akustisches Alarmsignal ausgelöst werden.

Die Kontaktzone kann räumlich auf denjenigen Bereich begrenzt sein, welcher dem Arbeitsbereich unmittelbar gegenüberliegt. Die Kontaktzone kann z.B. weniger als 50% oder weniger als 30% der gesamten im geschlossenen Zustand frei liegenden Innenfläche einnehmen. Es wäre auch möglich, größere Anteile der Innenseite des Rollos oder die gesamte Innenseite als Kontaktzone auszubilden.

Zur Bildung der Kontaktzone kann es beispielsweise vorgesehen sein, an der Innenseite des Rollos in dem entsprechenden Bereich mindestens ein Kontaktblech aus einem elektrisch leitenden Material (beispielsweise Edelstahl oder Aluminium) vorzusehen. Das Kontaktblech bzw. die Kontaktzone kann so mit einem in Berührung mit dem Draht stehenden Element der Drahtverarbeitungsmaschine verschaltet sein, dass ein Berührungskontakt zwischen dem elektrisch leitenden Draht und dem Kontaktblech bzw. der Kontaktzone unmittelbar einen Schaltkreis schließt, wodurch das Kontaktsignal generiert wird.

Anstelle eines selbsttragenden Kontaktblechs, welches als gesondertes Bauteil am Rollo angebracht werden kann, ist bei manchen Varianten auch eine Kontaktbeschichtung mit einem elektrisch leitenden Schichtmaterial möglich, um eine räumlich begrenzte Kontaktzone zu erzeugen. Es ist weiterhin möglich, einen elektrisch leitfähigen Kunststoff zur Erzeugung der Kontaktzone zu verwenden.

Es ist auch möglich, an der Innenseite des Rollos in dem entsprechenden Bereich der Kontaktzone mindestens ein Kontaktblech aus einem elektrisch leitenden Material anzubringen, das über einen oder mehrere elektrisch isolierende Abstandhalter von einem ebenfalls elektrisch leitenden Trägerelement getragen wird. Sobald in Richtung der Innenseite ein Druck auf das Kontaktblech ausgeübt wird, kommt es zu einem Berührungskontakt zwischen Kontaktblech und darunterliegendem Trägerelement und damit zu einem elektrisch leitenden Kontakt, wodurch ein Stromkreis in einer Sicherheitsschaltung geschlossen wird und das Kontaktsignal generiert wird. Eine derartige Sicherheitseinrichtung reagiert auf Druck von der Innenseite unabhängig davon, ob das den Druck ausübende Element elektrisch leitend ist oder nicht.

Möglich wäre auch, in die Kontaktzone mindestens einen Kraftsensor zu integrieren, welcher bei entsprechend hoher auf die Kontaktzone wirkender Kraft ein Kontaktsignal generiert.

Bei manchen Varianten ist zur weiteren Erhöhung der Sicherheit eine Sicherheitseinrichtung mit einem Schalter vorgesehen, der in der Schließstellung (d.h. dann, wenn das Rollo in Schließstellung ist) ein Schließstellungs-Signal erzeugt. Die Steuereinrichtung kann so konfiguriert sein, dass nur bei Empfang des Schließstellungs-Signals der Betrieb freigegeben ist und bei Öffnen des Rollos während des laufenden Betriebs ein Alarmsignal (optisch und/oder akustisch) abgegeben wird und/oder der Betrieb angehalten wird. Die Sicherheitseinrichtung sorgt auch automatisch für eine korrekte Position der Kontaktzone in Bezug auf den Arbeitsbereich.

Bei manchen Ausführungsformen ist das Rollo ein aufrollbares Rollo, wodurch eine einfache Handhabung und eine besonders platzsparende Unterbringung in der Offenstellung erreicht werden kann.

Das Rollo kann ein textiles Flächengebilde aufweisen oder durch ein solches gebildet sein. Es wäre z.B. möglich, für einen Teil des Rollos oder das komplette Rollo ein mechanisch hinreichend stabiles Gewebe zu verwenden, beispielsweise ein Gewebe aus Metallfasern und/oder Kunststofffasern, wie beispielsweise Aramid-Fasern. Bei einem Gewebe sollte die Schlitz- und Maschengröße den spezifischen Sicherheitsbestimmungen entsprechen. Beispielsweise sollten ein Durchgreifen von außen sowie ein Durchdringen des dünnsten, verwendeten Drahtes ausgeschlossen sein. Ein Gewebe sollte also hinreichend dicht sein.

Es ist auch möglich, eine mechanisch hinreichend stabile Folie als Rollo oder zum Herstellen eines Rollos zu verwenden. Es kann sich z.B. um eine Kunststofffolie (z.B. aus PVC) oder um eine Metallfolie, z.B. eine Stahlfolie, handeln. Auch Verbundwerkstoffe können zur Herstellung des Rollos verwendet werden. Das flexible Flächengebilde kann einlagig oder mehrlagig sein. Bei einer Weiterbildung weist das Rollo eine Vielzahl von gelenkig miteinander gekoppelten Gliedern auf, so dass das Rollo als Glieder-Rollo bzw. Gliederschürze ausgebildet ist. Die Glieder können in sich relativ steife, formstabile längliche Elemente aus einem festen schlagfesten Material, beispielsweise Metall, Kunststoff, einem Verbundwerkstoff oder einer Kombination mehrerer unterschiedlicher Werkstoffe, sein, die dem Rollo insgesamt hohe mechanische Stabilität verleihen. Durch die gelenkige Kopplung zwischen benachbarten Gliedern wird die Möglichkeit zur platzsparenden Unterbringung beispielsweise durch Aufrollen oder Zusammenfalten geschaffen.

Bei denjenigen Varianten, bei denen das Rollo eine Vielzahl von gelenkig miteinander gekoppelten Gliedern aufweist, kann mindestens eines der Glieder als Kontakt-Glied ausgebildet sein, welches beim Auftreffen eines Gegenstandes ein den Kontakt anzeigendes Kontaktsignal generiert, das an die Steuereinrichtung übertragbar ist. Das Rollo kann beispielsweise eine Gruppe von unmittelbar benachbarten Kontakt-Gliedern aufweisen, die gemeinsam die Kontaktzone bilden, wobei benachbart zu den Kontakt-Gliedern andere, nicht als Kontakt-Glieder ausgebildete Glieder einfacherer Bauform vorgesehen sein können.

Als weiteres Sicherheitsmerkmal ist bei manchen Ausführungsformen (mindestens) ein Bewegungssensor vorgesehen, der dafür konfiguriert ist, bei Eintreten eines Gegenstandes in einen außerhalb des Arbeitsbereichs liegenden verbotenen Bereich ein Sensorsignal zu erzeugen, welches an die Steuereinrichtung übertragbar ist. Die Steuereinrichtung kann so konfiguriert sein, dass bei Empfang eines Sensorsignals des Bewegungssensors eine Abschaltung beweglicher Einrichtungen der Drahtverarbeitungsmaschine eingeleitet wird.

Gerade bei Federherstellungsmaschinen kann es für einen Bediener hilfreich sein, den Ablauf während des Umformprozesses, also die Vorgänge im Bereich der Umformeinrichtung, unmittelbar beobachten zu können. Ein erfahrener Bediener kann dadurch möglicherweise sich ankündigende Probleme frühzeitig erkennen. Bei manchen Ausführungsformen von Drahtverarbeitungsmaschinen wird diesen Bedürfnissen dadurch Rechnung getragen, dass das Rollo mindestens ein Sichtfenster aufweist, welches derart angeordnet ist, dass der Arbeitsbereich der Drahtverarbeitungsmaschine bei geschlossenem Rollo durch das mindestens eine Sichtfenster hindurch für einen Bediener sichtbar ist. Hierdurch kann die Bedienerfreundlichkeit wesentlich erhöht werden.

Bei denjenigen Ausführungsformen, bei denen das Rollo eine Vielzahl von gelenkig miteinander gekoppelten Gliedern aufweist, kann mindestens eines der Glieder als Fenster-Glied mit mindestens einem integrierten Sichtfenster ausgebildet sein. Der Korpus des Fenster-Gliedes kann beispielsweise aus Metall oder einem anderen mechanisch stabilen, schlagfesten, undurchsichtigen Material bestehen, während das integrierte Sichtfenster aus einem geeignet stabilen und schlagfesten Kunststoff bestehen kann.

Als besonders bedienerfreundlich hat es sich herausgestellt, wenn das Rollo eine Vielzahl von Sichtfenstern aufweist. Ein Flächenanteil der Sichtfenster kann z.B. mehr als 50%, insbesondere mehr als 70%, der bei geschlossenem Rollo sichtbaren Fläche des Rollos betragen. Dadurch kann ein Bediener von unterschiedlichen Beobachtungspositionen aus alle ihn interessierenden Vorgänge hinter dem geschlossenen Rollo beobachten.

Bei konstruktiv einfacheren und kostengünstigen Varianten kann es reichen, wenn das Rollo manuell zwischen Offenstellung und Schließstellung bewegt werden kann. Bei manchen Varianten ist eine Gewichtsentlastung durch eine Federvorspannung in der Weise vorgesehen, dass die Kraft durch die Federspannung beim Schließen des Rollos überwunden werden muss und den Bediener beim Öffnen des Rollos aktiv unterstützt. Bei anderen Varianten ist ein automatischer Antrieb des Rollos vorgesehen, beispielsweise mit einem Elektromotor, welcher das Rollo auf eine entsprechende Bedienerhandlung hin automatisch öffnet bzw. schließt.

Die Schutzvorrichtung kann an unterschiedlichen Typen von Drahtverarbeitungsmaschinen vorgesehen sein, insbesondere an Federherstellungsmaschinen. Bei einer Klasse von Federherstellungsmaschinen erfolgt die Zufuhr von Draht von der Seite, das heißt im Wesentlichen parallel zur Maschinenvorderwand bzw. senkrecht zu der Achsrichtung der erzeugten Federn. Bei einer anderen Klasse von Federherstellungsmaschinen ist die Zuführeinrichtung für eine Drahtzuführung von der Hinterseite der Vorderwand ausgelegt. Besonders in letzterem Fall kann ein Fehler bei der Programmierung der Zuführeinrichtung gefährliche Folgen haben, da der Draht beim Zuführen sich im Wesentlichen senkrecht zur Vorderwand und damit im Prinzip in Richtung des Aufenthaltsbereichs eines Bedieners bewegt. Für diese Fälle bietet ein stabiles Rollo mit Kontaktzone einen zuverlässigen Schutz für den Bediener.

Ein Rollo mit Kontaktzone kann auch an einer Drahtstiftmaschine als Schutzvorrichtung verwendet werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schräg perspektivische Ansicht einer Ausführungsform einer Drahtverarbeitungsmaschine in Form einer Schenkelfedermaschine mit einer Variante eines Rollos in Offenstellung;
- Fig. 2: die Federherstellungsmaschine aus Fig. 1 mit dem Rollo in Schließstellung;

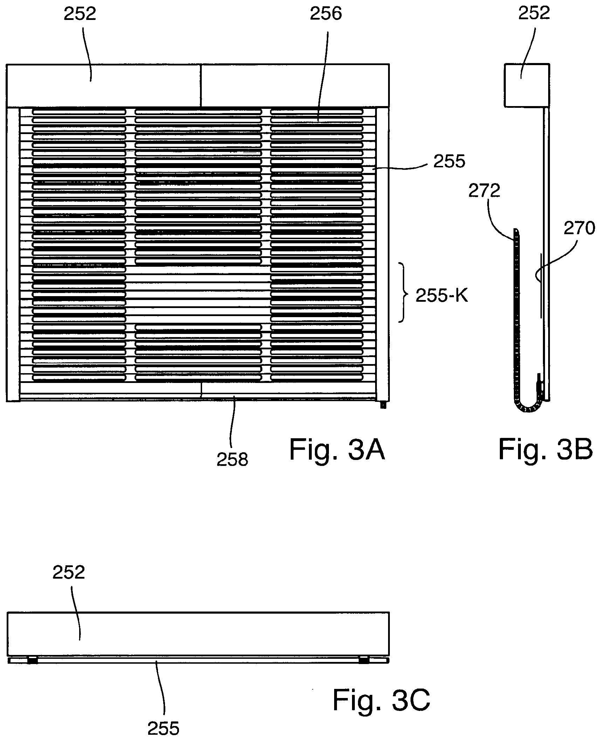

- Fig. 3: eine Ausführungsform eines Rollos in Draufsicht von der Vorderseite (Fig. 3A), in Seitenansicht (Fig. 3B) und in Draufsicht von oben (Fig. 3C)
- Fig. 4: eine schräg perspektivische Ansicht des Rollos aus Fig. 3 von der Vorderseite;
- Fig. 5: eine schräg perspektivische Ansicht des Rollos aus Fig. 3 von der im Einbauzustand der Maschinenvorderwand zugewandten Innenseite des Rollos; und
- Fig. 6: eine Seitenansicht einer Variante der Federherstellungsmaschine in einer Situation mit Kontakt zwischen Draht und Kontaktzone.

### DETAILLIERTE BESCHREIBUNG DER AUSFÜHRUNGSBEISPIELE

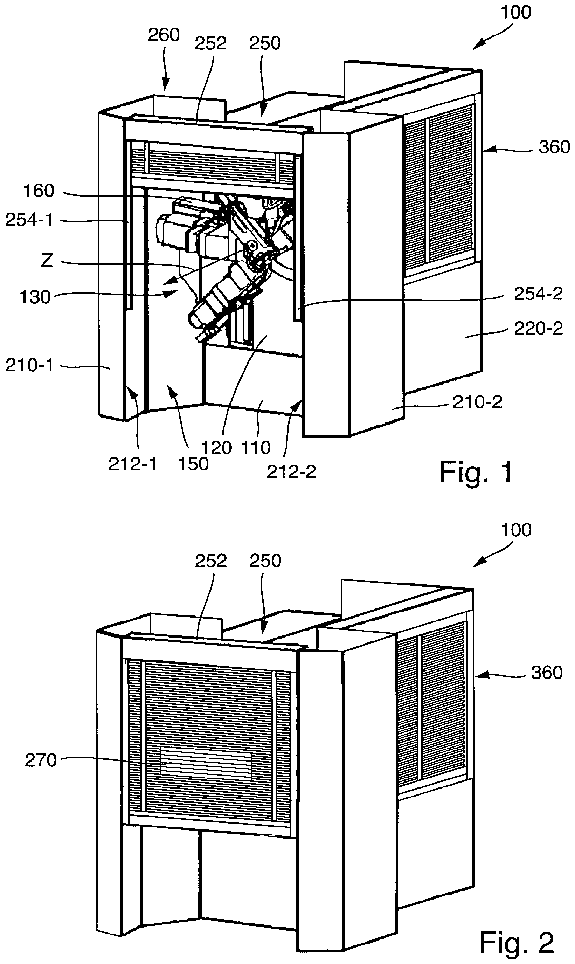

Die schrägperspektivische Ansicht von Fig. 1 zeigt einige konstruktive Elemente einer CNC-Federherstellungsmaschine 100 gemäß einer Ausführungsform der Erfindung. Die Federherstellungsmaschine steht beispielhaft für eine Drahtverarbeitungsmaschine und ist als Schenkelfedermaschine ausgelegt, um in einem automatisierten Umformprozess aus Draht eine Vielzahl von Schenkelfedern nominell gleicher Federgeometrie durch Federwinden herzustellen.

Auf einem Maschinengestell 110 ist eine vertikal aufragende Maschinenvorderwand 120 aufgebaut. An der dem Bediener zugewandten Vorderseite der Maschinenvorderwand 120 befindet sich eine Umformeinrichtung 130 mit mehreren Umformwerkzeugen, deren Positionen und Bewegungen über eine nicht gezeigte computernumerische Steuereinrichtung numerisch gesteuert werden. Die Umformwerkzeuge der Umformeinrichtung 130 sowie die Einrichtungen zum Halten und Bewegen der Umformwerkzeuge befinden sich im Arbeitsbereich 150 der Federherstellungsmaschine an der Vorderseite der Maschinenvorderwand. Dieser Arbeitsbereich muss zum Beispiel beim Einrichten der Maschine für einen neuen Federherstellungsprozess oder für Wartungs- und Kontrollarbeiten für einen Bediener zugänglich sein.

Die Federherstellungsmaschine hat an der in Fig. 1 nicht sichtbaren Rückseite der Maschinenvorderwand eine mit Zuführrollen ausgestattete Zuführeinrichtung, die aufeinanderfolgende Drahtabschnitte eines von einem Drahtvorrat kommenden und ggf. durch eine optionale Richteinheit geführten Drahtes mit numerisch gesteuertem Vorschubgeschwindigkeitsprofil in horizontaler Richtung in den Bereich der Umformeinrichtung 130 zuführen kann. Der Draht wird austrittsseitig durch eine Drahtführung 160 hindurchgeführt und tritt in horizontaler Zuführrichtung Z im Wesentlichen senkrecht zur Maschinenvorderwand nach vorne in Richtung Bedienerseite aus.

Während des Drahtumformprozesses wird der Draht mithilfe von numerisch gesteuerten Werkzeugen der Umformeinrichtung 130 zu einer Schenkelfeder umgeformt. Nach Abschluss der Umformung wird die fertige Schraubenfeder mittels einer Schnitteinrichtung vom zugeführten Draht abgetrennt. Zu den beim Umformen verwendeten Werkzeugen gehören unter anderem ein oder mehrere Windestifte und ein oder mehrere Steigungswerkzeuge, deren Bewegung mithilfe geeigneter elektrischer Antriebe unter Kontrolle der numerischen Steuerung stehen. Das Schnittwerkzeug wird ebenfalls numerisch gesteuert eingesetzt. Ein mögliches Ausführungsbeispiel einer Schenkelfedermaschine ist in der DE 10 2007 031 514 A1 gezeigt, deren Offenbarung insoweit durch Bezugnahme zum Inhalt dieser Beschreibung gemacht wird.

Eine äußere Verkleidung der Federherstellungsmaschine umfasst zwei säulenartige vordere Seitenwände 210-1 und 210-2, die an der Vorderseite links und rechts neben der Maschinenvorderwand so angeordnet ist, dass sie den Bereich der Umformeinrichtung seitlich abschließen und mit einander zugewandten vertikal verlaufenden Innenkanten 212-1, 212-2 eine rechteckförmige Öffnung begrenzen, die mit Abstand vor der Maschinenvorderwand angeordnet ist. Der rückwärtige Teil der Federherstellungsmaschine, das heißt der Bereich hinter der Maschinenvorderwand 120, in welchem sich unter anderem die Zuführeinrichtung und die Richteinheit befinden, wird nach außen über hintere Seitenwände (z.B. linke hintere Seitenwand 220-2) abgedeckt.

Die Federherstellungsmaschine umfasst eine Schutzvorrichtung 260, mit welcher der Arbeitsbereich 150, in welchem sich die Umformeinrichtung 130 befindet, während des Betriebs der Federherstellungsmaschine temporär abgedeckt und gegen Zugriff von außen geschützt werden kann. Ein wesentlicher Bestandteil der Schutzvorrichtung ist ein Rollo 250, das zwischen einer in Fig. 1 dargestellten geöffneten Stellung (Offenstellung) und einer in Fig. 2 dargestellten geschlossenen Stellung (Schließstellung) in vertikaler Richtung bewegt werden kann. Wie aus Fig. 1 ersichtlich, kann ein Bediener bei weitgehend oder vollständig geöffnetem Rollo (Offenstellung) in den Arbeitsbereich eingreifen, um beispielsweise Einstellungen an den Umformwerkzeugen vorzunehmen. Befindet sich das Rollo in Schließstellung (Fig. 2), ist ein solcher Zugriff verhindert, da das Rollo den Bereich zwischen den Innenkanten 212-1, 212-2 der vorderen Seitenwände oberhalb des Maschinengestells 110 mechanisch verschließt.

Die Unterkante der vollständig geschlossenen Rollos verbleibt mit definiertem Abstand oberhalb des Niveaus des Maschinengestells bzw. des Hallenbodens. Die unterhalb des geschlossenen Rollos zwischen den Innenkanten 212-1, 212-2 verbleibende Öffnung ermöglicht es einem Bediener, bei Bedarf nahe an das geschlossene Rollo heranzutreten. Vorteilhaft ist auch, dass in dem nicht durch das Rollo verdeckten unteren Bereich Einrichtungen für die Weiterbearbeitung oder Weiterverarbeitung der fertigen Federn direkt unter der Umformeinrichtung untergebracht werden können, z.B. Sammelbehälter, Sortiereinrichtung, Transportvorrichtung (wie z.B. Förderband) und/oder anderes. Es gibt auch Varianten, bei denen das Rollo bis zum Boden reicht.

Das Rollo ist zwischen den einander zugewandten Innenkanten 212-1, 212-2 der vorderen Seitenwände 210-1, 210-2 eingebaut und befindet sich im Einbauzustand in einem gewissen Abstand vor der Maschinenvorderwand, so dass zwischen den am weitesten vorne liegenden Teilen der Umformeinrichtung und der der Umformeinrichtung zugewandten Innenseite des Rollos noch ein Abstand verbleibt. Am oberen Ende der Seitenwände 210-1, 210-2 ist zwischen deren Innenkanten ein Rollkasten 252 eingebaut, der eine Wickelrolle für das Rollo enthält und das Rollo in aufgerolltem Zustand weitgehend aufnehmen kann. An der Unterseite des Rollkastens sind an den Innenkanten eine linke Führungsschiene 254-1 und eine rechte Führungsschiene 254-2 angeschraubt, in welchen die Elemente des Rollos in vertikaler Richtung geführt werden.

Das Rollo 250 ist als Glieder-Rollo bzw. Gliederschütze ausgebildet. Das Rollo weist eine Vielzahl von Gliedern 255 auf, die hier aufgrund ihrer langen, schmalen Form auch als Lamellen 255 bezeichnet werden und in Kombination miteinander ein aufrollbares Flächengebilde bilden.

Jede der Glieder 255 weist ein in sich relativ steifes Profil aus Aluminium oder einem anderen Metall auf und ist in der (im Einbauzustand horizontal verlaufenden) Breitenrichtung um ein Vielfaches länger als in der (im Einbauzustand vertikal ausgerichteten) Höhenrichtung. Das Aspektverhältnis zwischen Breite und Höhe kann beispielsweise zwischen 20:1 und 60:1 liegen und liegt im Beispielsfall bei ca. 40:1.

Unmittelbar benachbarte Glieder bzw. Lamellen sind entlang ihrer (in Breitenrichtung verlaufenden) Längskanten gelenkig miteinander verbunden, so dass sie um eine in Breitenrichtung verlaufende Achse gegeneinander verschwenkbar und gegebenenfalls in Breitenrichtung geringfügig aufeinander zu und voneinander weg bewegbar sind. Das obere Ende des Rollos ist auf einem nicht gezeigten Wickelkern im Rollkasten 252 befestigt. Am freien unteren Ende befindet sich eine Abschlussleiste, an deren Außenseite eine horizontale Griffstange 258 angebracht ist, mit deren Hilfe der Bediener das Rollo durch Heraufschieben nach oben öffnen und durch Herunterziehen nach unten schließen kann. Die Griffstange befindet sich bei geschlossenem Rollo (Fig. 2) in einer Höhe, die ein Bediener bequem mit den Händen erreichen kann, ohne sich zu bücken.

Jedes der Glieder 255 ist als Fenster-Glied (bzw. Fenster-Lamelle) mit zwei oder drei integrierten, relativ schmalen Sichtfenstern 256 aus einem schlagfesten transparenten Kunststoff ausgestattet. Im oberen Endbereich (in Richtung Rollkasten) und im unteren Endbereich (in Richtung Griffstange) haben die Fenster-Glieder jeweils drei mit geringem Abstand nebeneinander liegende schmale Fenster, die in ihrer Gesamtheit jeweils über 90% der Länge des Gliedes (in Breitenrichtung) einnehmen, so dass das Glied fast durchsichtig erscheint und der Blick nur durch die schmalen, die Sichtfenster einschließenden Rahmenteile unterbrochen wird.

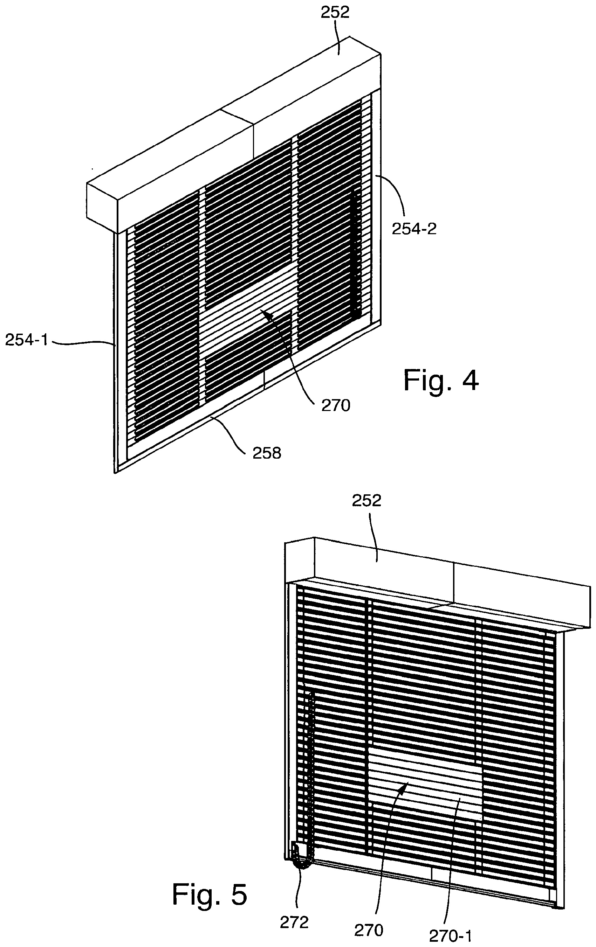

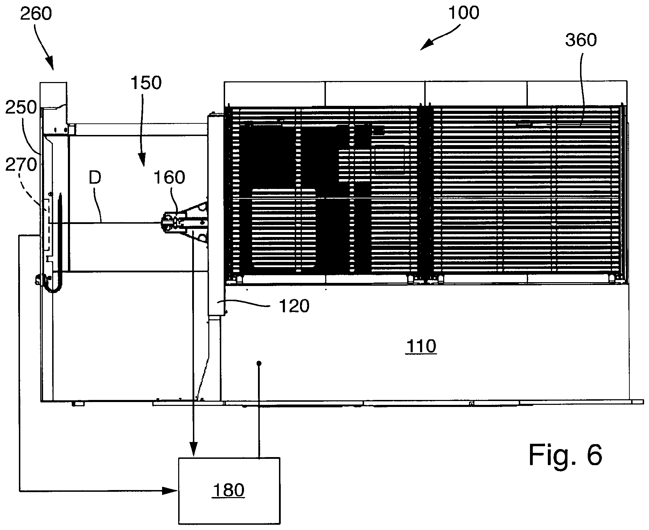

Zwischen dem kastenseitigen und dem griffseitigen Endbereich befindet sich im Beispielsfall eine Gruppe von sieben unmittelbar benachbarten Gliedern bzw. Lamellen 255-K, die als funktionelle Komponenten einer weiteren Sicherheitseinrichtung dienen. Diese sieben Glieder sind als Kontakt-Glieder ausgebildet, die beim Auftreffen eines Gegenstandes von der der Umformeinrichtung zugewandten Innenseite her ein elektrisches Kontaktsignal auslösen können, welches an die Steuereinrichtung 180 übertragen werden kann (vgl. Fig. 6). Jeweils im mittleren Drittel eines Kontakt-Gliedes ist an der Innenseite des Grundkörpers des Gliedes ein Kontaktblech 270-1 angebracht (Fig. 5), welches mittels elektrisch isolierender schmaler Abstandhalter in geringem Abstand vor der Innenseite des Grundkörpers gehalten wird. Von jedem der Kontaktbleche führt ein elektrisch isoliertes Kabel durch den Grundkörper hindurch und durch eine seitlich an der Innenseite angebrachte flexible (biegsame) Energieführung 272 hindurch bis zu einem Anschluss, der mit der Steuereinrichtung 180 verbunden ist. Die Kontaktbleche können auch untereinander elektrisch verbunden sein, so dass ein einziges Anschlusskabel ausreicht.

Figur 6 zeigt eine Seitenansicht einer Federherstellungsmaschine, die aus Gründen der Darstellung ohne die Umformeinrichtung dargestellt ist. Wie in Fig. 6 schematisch dargestellt, ist die elektrische Schaltung so konfiguriert, dass ein Kontaktsignal nur dann erzeugt wird, wenn bei geschlossenem Rollo 250 beispielsweise bei Fehlprogrammierung des Drahteinzugs ein zugeführter Draht D von innen gegen ein Kontaktblech der Kontaktzone 270 drückt und dieses dadurch elektrisch kontaktiert. Im Beispielsfall wird das dadurch erreicht, dass ein drahtführendes Element der Drahtverarbeitungsmaschine, z.B. die Drahtführung 160, ebenfalls elektrisch leitend mit der Steuerung verbunden ist, so dass bei Berührungskontakt zwischen Draht und Kontaktblech eine Sicherheits-Schaltkreis geschlossen wird, was zur Notabschaltung der Maschine führt.

Die sieben unmittelbar übereinander angeordneten Kontaktbleche 270-1 bilden gemeinsam eine rechteckförmige Kontaktzone 270, deren Zentrum im Wesentlichen mit der zentralen Achse der Drahtführung 160 zusammenfällt, so dass ein durch die Drahtführung in Richtung Rolltür bewegter Draht normalerweise im mittleren Bereich der Kontaktzone auftreffen wird. Links und rechts neben der Kontaktzone sowie oberhalb und unterhalb befinden sich jeweils Sichtfenster, so dass das gesamte Rollo mit Ausnahme der rechteckförmigen Kontaktzone 270 dem Bediener einen bequemen Blick auf die Vorgänge im Bereich der Umformeinrichtung erlaubt.

Die mit dem Rollo 250 ausgestattete Schutzvorrichtung ist einfach zu bedienen und hat eine geringe Eigenmasse. Eine Gewichtsentlastung durch eine Federvorspannung erleichtert zudem das Öffnen des Rollos. Es ist auch möglich, das Öffnen und/oder Schließen mittels Servomotor, pneumatischer Zylinder und/oder mittels Gewichten zu unterstützen. Durch die transparenten Kunststoffeinsätze in den Fenster-Gliedern erscheint das Rollo weitgehend durchsichtig. Mithilfe der Kontaktzone 270 an der Innenseite des Rollos wird im Störfall automatisch eine Notabschaltung eingeleitet.

Bei dem Ausführungsbeispiel von Fig. 1 und 2 ist an der Verkleidung der Federherstellungsmaschine ein weiteres Rollo 360 vorgesehen. Das Rollo 360 an der rechten hinteren Seitenwand 220-2 dient dazu, den hinteren Teil der Federherstellungsmaschine mit der Drahtzuführungseinrichtung der optionalen Richteinheit vor unbefugtem Zugriff von außen während des Betriebs zu schützen. Für Einstellarbeiten, Wartungsarbeiten oder für andere Zwecke kann das Rollo genau wie das Rollo an der Vorderseite nach oben in ihrer Offenstellung bewegt werden. Das Rollo kann einen einfachen Aufbau haben, da eine Kontaktzone in diesem Fall nicht vorgesehen sein muss.

Die vorliegende Anmeldung beschreibt unter anderem eine besonders bedienerfreundliche und wirksame Schutzeinrichtung als Zugangs- und Griffschutz für eine Drahtverarbeitungsmaschine. Die Schutzeinrichtung kann als aufrollbare Gliederschürze mit Metallprofilen mit durchsichtigen Kunststoffeinsätzen ausgeführt sein. Sie ist einfach zu bedienen, einfach zu öffnen und bietet durch die durchsichtigen Kunststoffeinsätze die Möglichkeit, den Prozess innerhalb der Maschine zu beobachten, ohne die Maschine stoppen und stillsetzen zu müssen. In einem Fehlerfall, beispielsweise bei Kontakt des Drahtes mit der Schutzeinrichtung, wird die Federherstellungsmaschine stillgesetzt und es kann ein Alarm ausgelöst werden. Die Bedienung der Schutzvorrichtung ist einfach, robust und ergonomisch ausgeführt. Der Zeit- und Kraftaufwand zum Bedienen der Schutzeinrichtung ist minimal. Bei Werkzeugbruch und/oder Prozessstörungen ist durch den eingebauten Berührungssensor (in der Kontaktzone) die Abschaltung der Maschine gewährleistet. Das Rollo verhindert als mechanische Barriere in der Schließstellung den direkten Zugang in den Gefahrenbereich. Trotz des Zugangsschutzes ist durch die Sichtfenster eine Prozessbeobachtung durch den Bediener möglich.

## Patentansprüche

1. Drahtverarbeitungsmaschine (100) zur Herstellung von Umformteilen, insbesondere von Federn, durch Umformen von Draht mit:
einem Maschinengestell mit einer Maschinenvorderwand (120);
einer Umformeinrichtung (130) mit mindestens einem Umformwerkzeug, welches in einem Arbeitsbereich (150) an einer Vorderseite der Maschinenvorderwand angeordnet ist;
einer Zuführeinrichtung zum Zuführen von Draht zu der Umformeinrichtung (130);
einer Schnitteinrichtung zum Abtrennen eines fertig gestellten Umformteils von dem zugeführten Draht nach Abschluss einer Umformoperation;
einer Steuereinrichtung (180) zur Steuerung der Zuführeinrichtung, der Umformeinrichtung, und der Schnitteinrichtung auf Basis eines NC-Steuerprogramms; und
einer Schutzvorrichtung (260) zur temporären Abdeckung des Arbeitsbereichs (150) während des Betriebs der Drahtverarbeitungsmaschine,
**dadurch gekennzeichnet dass**
die Schutzvorrichtung (260) ein Rollo (250) aufweist, welches zwischen einer Offenstellung und einer Schließstellung beweglich ist, wobei in der Offenstellung ein Zugriff eines Bedieners in den Arbeitsbereich möglich ist und in der Schließstellung der Zugriff verhindert wird; und
das Rollo eine Kontaktzone (270) aufweist, welche sich an der der Umformeinrichtung zugewandten Innenseite des Rollos (250) auf Höhe des Arbeitsbereichs (150) befindet, wenn das Rollo in Schließstellung ist, wobei die Kontaktzone derart ausgebildet ist, dass bei Auftreffen eines Gegenstandes auf die Kontaktzone ein den Kontakt anzeigendes Kontaktsignal generiert wird, welches an die Steuereinrichtung übertragbar ist.

2. Drahtverarbeitungsmaschine nach Anspruch 1, **dadurch gekennzeichnet, dass** die Steuereinrichtung (180) derart konfiguriert ist, dass bei Empfang eines Kontaktsignals eine Abschaltung beweglicher Einrichtungen der Drahtverarbeitungsmaschine (100) eingeleitet wird und/oder dass in Reaktion auf den Empfang des Kontaktsignals ein optisches und/oder akustisches Alarmsignal ausgelöst wird.

3. Drahtverarbeitungsmaschine nach Anspruch 1 oder 2, **dadurch gekennzeichnet, dass** die Kontaktzone (270) räumlich auf einen Bereich begrenzt ist, welcher dem Arbeitsbereich (150) unmittelbar gegenüberliegt, wobei die Kontaktzone vorzugsweise weniger als 50%, insbesondere weniger als 30% der gesamten im geschlossenen Zustand frei liegenden Innenfläche des Rollos (250) einnimmt.

4. Drahtverarbeitungsmaschine nach einem der vorhergehenden Ansprüche, **dadurch gekennzeichnet, dass** an der Innenseite des Rollos im Bereich der Kontaktzone (270) mindestens ein Kontaktblech (270-1) aus einem elektrisch leitenden Material angebracht ist.

5. Drahtverarbeitungsmaschine nach einem der vorhergehenden Ansprüche, **dadurch gekennzeichnet, dass** die Kontaktzone (270) derart mit einem in Berührung mit dem Draht stehenden Element der Drahtverarbeitungsmaschine verschaltet ist, dass ein Berührungskontakt zwischen dem elektrisch leitenden Draht (D) und der Kontaktzone unmittelbar einen Schaltkreis schließt, wodurch das Kontaktsignal generiert wird.

6. Drahtverarbeitungsmaschine nach einem der vorhergehenden Ansprüche, **gekennzeichnet durch** eine Sicherheitseinrichtung mit einem Schalter, der in der Schließstellung ein Schließstellungs-Signal erzeugt, wobei die Steuereinrichtung (180) so konfiguriert ist, dass nur bei Empfang des Schließstellungs-Signals der Betrieb freigegeben ist und bei Öffnen des Rollos (250) während des laufenden Betriebs ein Alarmsignal abgegeben wird und/oder der Betrieb angehalten wird.

7. Drahtverarbeitungsmaschine nach einem der vorhergehenden Ansprüche, **dadurch gekennzeichnet, dass** das Rollo (250) ein aufrollbares Rollo ist.

8. Drahtverarbeitungsmaschine nach einem der vorhergehenden Ansprüche, **dadurch gekennzeichnet, dass** das Rollo eine Vielzahl von gelenkig miteinander gekoppelten Gliedern (255) aufweist, so dass das Rollo (250) als Glieder-Rollo ausgebildet ist.

9. Drahtverarbeitungsmaschine nach Anspruch 8, **dadurch gekennzeichnet, dass** mindestens eines der Glieder als Kontakt-Glied ausgebildet ist, welches bei Auftreffen eines Gegenstandes das den Kontakt anzeigende Kontaktsignal generiert, welches an die Steuereinrichtung (180) übertragbar ist.

10. Drahtverarbeitungsmaschine nach einem der vorhergehenden Ansprüche, **dadurch gekennzeichnet, dass** das Rollo (250) mindestens ein Sichtfenster (256) aufweist, welches derart angeordnet ist, dass der Arbeitsbereich (150) der Drahtverarbeitungsmaschine bei geschlossenem Rollo durch das mindestens eine Sichtfenster hindurch für einen Bediener sichtbar ist.

11. Drahtverarbeitungsmaschine nach einem der Ansprüche 8 bis 10, **dadurch gekennzeichnet, dass** mindestens eines der Glieder als Fenster-Glied mit mindestens einem integrierten Sichtfenster (256) ausgebildet ist.

12. Drahtverarbeitungsmaschine nach einem der Ansprüche 10 oder 11, **dadurch gekennzeichnet, dass** das Rollo (250) eine Vielzahl von Sichtfenstern aufweist, wobei ein Flächenanteil der Sichtfenster mehr als 50% der bei geschlossenem Rollo sichtbaren Fläche des Rollos beträgt.

13. Drahtverarbeitungsmaschine nach einem der vorhergehenden Ansprüche, **dadurch gekennzeichnet** durch mindestens einen Bewegungssensor, der dafür konfiguriert ist, bei Eintreten eines Gegenstandes in einen außerhalb des Arbeitsbereichs (150) liegenden verbotenen Bereich ein Sensorsignal zu erzeugen, welches an die Steuereinrichtung (180) übertragbar ist.

14. Drahtverarbeitungsmaschine nach einem der vorhergehenden Ansprüche, **dadurch gekennzeichnet, dass** die Zuführeinrichtung für eine Drahtzuführung von der Hinterseite der Vorderwand (120) ausgelegt ist.

## Claims

1. Wire processing machine (100) for producing shaped parts, in particular springs, by shaping wire, having:
a machine frame with a machine front wall (120);
a shaping device (130) with at least one shaping tool, which is arranged in a working area (150) on a front side of the machine front wall;
a feeding device for feeding wire to the shaping device (130);
a cutting device for cutting off a completed shaping part from the fed wire after completion of a shaping operation;
a control device (180) for controlling the feeding device, the shaping device, and the cutting device on the basis of an NC control program; and
a protection device (260) for temporarily covering the working area (150) during the operation of the wire processing machine,
**characterized in that**
the protection device (260) comprises a roller blind (250), which can be moved between an open position and a closed position, wherein in the open position it is possible for an operator to access the working area and in the closed position access is prevented; and
the roller blind comprises a contact zone (270), which is located on the inner side of the roller blind (250) facing the shaping device, at the height of the working area (150), when the roller blind is in the closed position, wherein the contact zone is designed in such a way that, on impact of an object on the contact zone, a contact signal indicating the contact is generated and can be transmitted to the control device.

2. Wire processing machine according to claim 1, **characterized in that** the control device (180) is configured in such a way that a switching off of movable devices of the wire processing machine (100) is initiated when a contact signal is received and/or **in that** an optical and/or acoustic alarm signal is triggered in response to the reception of the contact signal.

3. Wire processing machine according to claim 1 or 2, **characterized in that** the contact zone (270) is spatially confined to an area that lies directly opposite the working area (150), wherein the contact zone preferably takes up less than 50%, in particular less than 30%, of the entire inner surface of the roller blind (250) that is exposed in the closed state.

4. Wire processing machine according to any of the preceding claims, **characterized in that** at least one contact plate (270-1) of an electrically conducting material is attached to the inner side of the roller blind in the area of the contact zone (270).

5. Wire processing machine according to any of the preceding claims, **characterized in that** the contact zone (270) is electrically connected to an element of the wire processing machine that is in contact with the wire in such a way that physical contact between the electrically conducting wire (D) and the contact zone directly closes a circuit, whereby the contact signal is generated.

6. Wire processing machine according to any of the preceding claims, **characterized by** a safety device with a switch which in the closed position generates a closed-position signal, wherein the control device (180) is configured such that operation is only enabled when the closed-position signal is received and an alarm signal is emitted and/or operation is halted if the roller blind (250) is opened while the machine is operating.

7. Wire processing machine according to any of the preceding claims, **characterized in that** the roller blind (250) is a roll-up blind.

8. Wire processing machine according to any of the preceding claims, **characterized in that** the roller blind comprises a multiplicity of segments (255) coupled to one another in an articulated manner, so that the roller blind (250) is formed as a segmented blind.

9. Wire processing machine according to claim 8, **characterized in that** at least one of the segments is formed as a contact segment, which on impact of an object generates the contact signal indicating the contact, which can be transmitted to the control device (180).

10. Wire processing machine according to any of the preceding claims, **characterized in that** the roller blind (250) comprises at least one viewing window (256), which is arranged in such a way that the working area (150) of the wire processing machine can be seen by an operator through the at least one viewing window when the roller blind is closed.

11. Wire processing machine according to any of claims 8 to 10, **characterized in that** at least one of the segments is formed as a window segment with at least one integrated viewing window (256).

12. Wire processing machine according to any of claims 10 or 11, **characterized in that** the roller blind (250) comprises a multiplicity of viewing windows, wherein a proportion of the surface area that is taken up by viewing windows is over 50% of the visible surface area of the roller blind when the blind is closed.

13. Wire processing machine according to any of the preceding claims, **characterized by** at least one movement sensor, which is configured for generating a sensor signal, which can be transmitted to the control device (180), when an object enters a prohibited area lying outside the working area (150).

14. Wire processing machine according to any of the preceding claims, **characterized in that** the feeding device is designed for feeding wire from the rear side of the front wall (120).

## Revendications

1. Machine d'usinage de fil métallique (100) destinée à fabriquer des pièces façonnées, notamment des ressorts, par façonnage de fil métallique, comportant :
un châssis de machine pourvu d'une paroi avant de machine (120) ;
un système de façonnage (130) pourvu d'au moins un outil de façonnage, qui est placé dans une zone de travail (150) sur une face avant de la paroi avant de machine ;
un système d'alimentation, destiné à alimenter du fil métallique vers le système de façonnage (130) ;
un système de coupe, destiné à séparer une pièce façonnée finie du fil métallique alimenté après l'achèvement d'une opération de façonnage ;
un système de commande (180), destiné à commander le système d'alimentation, le système de façonnage et le système de coupe sur la base d'un programme de commande numérique ; et
un dispositif de protection (260), destiné à recouvrir temporairement la zone de travail (150) pendant le fonctionnement de la machine d'usinage de fil métallique,
**caractérisée en ce que**
le dispositif de protection (260) comporte un store (250) qui est mobile entre une position d'ouverture et une position de fermeture, dans la position d'ouverture un accès d'un opérateur à la zone de travail étant possible et dans la position de fermeture, l'accès étant empêché ; et
le store comporte une zone de contact (270) qui se trouve sur la face intérieure du store (250) qui est dirigée vers le système de façonnage, à hauteur de la zone de travail (150) lorsque le store se trouve dans la position de fermeture, la zone de contact étant conçue de telle sorte que lors de l'impact d'un objet sur la zone de contact, il soit généré un signal de contact indiquant le contact, qui est transmissible au système de commande.

2. Machine d'usinage de fil métallique selon la revendication 1, **caractérisée en ce que** le système de commande (180) est configuré de telle sorte que lors de la réception d'un signal de contact, une mise à l'arrêt de systèmes mobiles de la machine d'usinage de fil métallique (100) est initiée et/ou qu'en réaction à la réception du signal de contact, un signal d'alerte visuel et/ou acoustique est déclenché.

3. Machine d'usinage de fil métallique selon la revendication 1 ou 2, **caractérisée en ce que** la zone de contact (270) est délimitée dans l'espace à une zone qui se trouve directement à l'opposé de la zone de travail (150), la zone de contact occupant de préférence moins de 50 %, notamment moins de 30 % de l'ensemble de la surface intérieure libre du store (250) en position fermée.

4. Machine d'usinage de fil métallique selon l'une quelconque des revendications précédentes, **caractérisée en ce que** sur la face intérieure du store, dans la région de la zone de contact (270) est montée au moins une tôle de contact (270-1) en une matière conductrice d'électricité.

5. Machine d'usinage de fil métallique selon l'une quelconque des revendications précédentes, **caractérisée en ce que** la zone de contact (270) est interconnectée avec un élément de la machine d'usinage de fil métallique qui est en contact avec le fil métallique de telle sorte qu'un contact entre le fil métallique (D) conducteur d'électricité et la zone de contact ferme directement un circuit de commutation, suite à quoi, le signal de contact est généré.

6. Machine d'usinage de fil métallique selon l'une quelconque des revendications précédentes, **caractérisée par** un système de sécurité pourvu d'un interrupteur, qui dans la position de fermeture génère un signal de position de fermeture, le système de commande (180) étant configuré de telle sorte que le fonctionnement ne soit validé que lors de la réception du signal de position de fermeture et qu'à l'ouverture du store (250) pendant le fonctionnement en cours, un signal d'alerte soit délivré et/ou le fonctionnement soit stoppé.

7. Machine d'usinage de fil métallique selon l'une quelconque des revendications précédentes, **caractérisée en ce que** le store (250) est un store enroulable.

8. Machine d'usinage de fil métallique selon l'une quelconque des revendications précédentes, **caractérisée en ce que** le store comporte une pluralité d'organes (255) couplés les uns aux autres de manière articulée, de sorte que le store (250) est conçu sous la forme d'un store articulé.

9. Machine d'usinage de fil métallique selon la revendication 8, **caractérisée en ce qu'**au moins l'un des organes est conçu sous la forme d'un organe de contact, qui lors de l'impact d'un objet, génère le signal de contact indiquant le contact, qui est transmissible au système de commande (180).

10. Machine d'usinage de fil métallique selon l'une quelconque des revendications précédentes, **caractérisée en ce que** le store (250) comporte au moins une fenêtre de visualisation (256) qui est placée de telle sorte que lorsque le store est fermé, le zone de travail (150) de la machine d'usinage de fil métallique soit visible par un opérateur à travers l'au moins une fenêtre de visualisation.

11. Machine d'usinage de fil métallique selon l'une quelconque des revendications 8 à 10, **caractérisée en ce qu'**au moins l'un des organes est conçu sous la forme d'un organe de fenêtre, pourvu d'au moins une fenêtre de visualisation (256) intégrée.

12. Machine d'usinage de fil métallique selon l'une quelconque des revendications 10 ou 11, **caractérisée en ce que** le store (250) comporte une pluralité de fenêtres de visualisation, une part surfacique de la fenêtre de visualisation correspondant à plus de 50 % de la surface visible du store, lorsque le store est fermé.

13. Machine d'usinage de fil métallique selon l'une quelconque des revendications précédentes, **caractérisée par** au moins un capteur de déplacement qui est configuré de sorte à générer un signal de capteur qui est transmissible au système de commande (180), lors de l'entrée d'un objet dans une zone interdite située hors de la zone de travail (150).

14. Machine d'usinage de fil métallique selon l'une quelconque des revendications précédentes, **caractérisée en ce que** le système d'alimentation est conçu pour une alimentation du fil métallique à partir de la face arrière de la paroi avant (120).
